Europäisches Patentamt

(19) European Patent Office

Office européen des brevets

(11) Publication number: **0 111 020**
**B1**

(12) **EUROPEAN PATENT SPECIFICATION**

(45) Date of publication of patent specification: **29.04.87**

(21) Application number: **82111375.0**

(22) Date of filing: **08.12.82**

(51) Int. Cl.⁴: **A 23 C 9/123,** A 23 C 13/16

(54) Method for the preparation of naturally thickened and stabilized fermented milk products and products produced thereby.

(43) Date of publication of application:
**20.06.84 Bulletin 84/25**

(45) Publication of the grant of the patent:
**29.04.87 Bulletin 87/18**

(84) Designated Contracting States:
**AT BE CH DE FR GB IT LI LU NL SE**

(56) References cited:
**FR-A-1 263 214**
**FR-A-1 420 273**
**FR-A-2 354 711**
**FOOD SCIENCE & TECHNOLOGY ABSTRACTS,
no. 72014860 G. BUSCH-JOHANNSEN et al.:
"Yoghurt production through slow acidification
at 30 degree C"**

**CHEMICAL ABSTRACTS, vol. 92, 1980, page
312, no. 72342k, Columbus, Ohio, USA; M.
PAKKILA et al.; "Comparision of membrane
proteins from lactic streptococci by gel
electrophoresis"**

The file contains technical information
submitted after the application was filed and
not included in this specification

(73) Proprietor: **MICROLIFE TECHNICS, INC.**
**1833 57th Street**
**Sarasota Florida 33578 (US)**

(72) Inventor: **Vedamuthu, Ebenezer R.**
**3505 27th Avenue**
**Bradenton Florida 33505 (US)**
Inventor: **Shah, Ramesh B.**
**3610 York Dr. West**
**Bradenton Florida 33505 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

(56) References cited:
**JOURNAL OF DAIRY SCIENCE, vol. 65, no. 4,
April 1982, pages 509-514, Champaign, Illinois,
USA L. ALM: "Effects of fermentation on curd
size and digestibility of milk proteins in vitro of
Swedish fermented milk products"**

## Description

### Background of the invention

The present invention relates to naturally stabilized, thick bodied fermented milk products which are produced by fermentation without the need for added stabilizing or thickening agents. In particular the present invention relates to a method which uses mixed cultures of milk fermenting, non-slime, lactic acid producing bacteria and slime producing *Streptococcus lactis, Streptococcus cremoris* or mixtures thereof having the thickening and stabilizing characteristics of *Streptococcus cremoris* NRRL-B-12,361, 12,362 or 12,363 for the fermentations.

### Prior art

Dairy products, such as yogurt and buttermilk, prepared by fermentation have a characteristic thick lumpy texture which is not uniformly cohesive and smooth when stirred and also these products have a tendency to "whey off" upon standing by the separation or shrinking of the curd which exudes the whey. Various additive stabilizing agents, such as plant gums, starches and cellulose derivatives, are used commercially in an attempt to improve the texture by making the products smoother and to improve the storage stability of the fermented milk products. U.S. Patent Nos. 3,080,236; 3,235,387; 3,269,842; 3,539,363; 3,932,680 and 3,969,534 describe the use of various added stabilizers and are representative of this prior art practice which is widely used commercially. Such stabilizing agents add to the cost of the products and in addition introduce a sometime unwanted ingredient into the fermented milk product. Generally non-fat milk solids are added to the fermented milk products prior to the fermentation in order to thicken them. Stabilizing agents are generally not added after the fermentation because microbial contamination will occur and the product will spoil faster. U.S. Patent No. 4,243,684 shows the use of "ropy" cultures of lactic acid producing bacteria in place of non-ropy cultures for making cheese. Also ropy cultures are used in the Scandinavian countries to make ropy products. None of these products have the texture of the hereinafter described products of the present invention.

In the prior art reference FR—A—1 420 273 the use of a mixture of L. bulgaricus and a slime forming strain of S. thermophylus has been disclosed which results in the production of a thick yoghurt. It was not obvious to the man skilled in the art from this disclosure to replace the slime forming strain of S. thermophylus by a particular slime forming strain of S. lactis or S. cremoris or a mixture thereof to obtain a thickened liquid product.

Only the prior art disclosure of FR—A—2 354 711 which makes use of such slime forming strains teaches to replace slime forming strains by the corresponding non-slime forming strains in the manufacture of soft cheese, which also is not a liquid product.

### Objects

It is therefore an object of the present invention to provide novel naturally thick bodied and stabilized, fermented milk products. It is further an object of the present invention to provide such thick bodied, fermented milk products which are relatively inexpensive to manufacture and which have a storage stability to wheying off which is at least equivalent to products which are produced with added stabilizing agents. Additionally, it is an object of the present invention to provide thick bodied, fermented milk products which have a unique silky smooth or "velvet" texture without any ropiness or sliminess by means of the use of selected slime producing strains of *Streptococcus lactis, Streptococcus cremoris* or mixtures thereof admixed with lactic acid producing bacteria. These and other objects will become increasingly apparent by reference to the following description.

### Description of the invention

The present invention relates to a thick bodied fermented milk product which comprises: milk with a pH between about 4.2 and 4.7 which has been fermented with a mixed culture containing a milk fermenting, non-slime, lactic acid producing bacteria and slime producing *Streptococcus lactis, Streptococcus cremoris* or mixtures thereof having the thickening and stabilizing characteristics of *Streptococcus cremoris* NRRL-B-12,361, 12,362 or 12,363 to produce the thick bodied milk product without need for addition of non-fat milk solids and without resulting in a slimy or ropy product, wherein the product is stable to separation of whey from curd upon storage at refrigeration temperatures without added stabilizing agents.

Further the present invention relates to the method of producing a thick bodied fermented milk product which comprises: providing in milk a mixed culture containing milk fermenting, non-slime, lactic acid producing bacteria which reduce the pH of the milk and slime producing *Streptococcus lactis, Streptococcus cremoris* or mixtures thereof having the thickening and stabilizing characteristics of *Streptococcus cremoris* NRRL-B-12,361, 12,362 or 12,363; and fermenting the milk with the culture to produce the thick bodied milk product without need for addition of non-fat milk solids and without resulting in a slimy or ropy product, wherein the product is stable to separation of whey from curd upon storage at refrigeration temperatures without added stabilizing agents.

*Streptococcus cremoris* NRRL-B-12,361 (which is preferred) is available along with NRRL-B-12,362 and NRRL-B-12,363 to anyone who requests it by number from the United States Department of Agriculture,

2

Northern Regional Research Center, 1815 North University Street, Peoria, Illinois 61604. Other related strains having the thickening characteristics of NRRL-B-12,361 can be selected from available cultures and tested by fermentation in milk. Thus *Streptococcus cremoris* NRRL-B-12,362 and *Streptococcus cremoris* NRRL-B-12,363 were also found to have this characteristic. It is contemplated that genetic manipulation of any strain of *Streptococcus cremoris* or *Streptococcus lactis* by recombinant or mutagenic techniques could produce strains having the same essential fermentation characteristics of NRRL-B-12,361, 12,362 or 12,363 and it is intended that these be included in the present invention.

The fermentation characteristics of strains NRRL-B-12,361, 12,362 and 12,363 are particularly unique in that they have the ability to produce a silky smooth "velvet" texture in fermented milk in combination with non-slime, lactic acid producing bacteria, without any ropiness or sliminess. The term "ropiness" is defined as meaning the tendency of the milk to agglomerate into long strands as a result of the fermentation. The term "sliminess" refers to a product which is tacky such that the tongue tends to stick to the palate upon tasting. An example of "sliminess" is the slick feel of the white of a raw egg. It is a characteristic of a few strains of *Streptococcus lactis* and *Streptococcus cremoris* that in pure culture they produce fermented milk products which are ropy and slimy, characteristics which are undesirable. In the present invention, when these selected slime producing strains of *Streptococcus lactis* and/or *Streptococcus cremoris* are mixed in specific proportions with other traditionally used non-slime, lactic acid bacteria, ropy or slimy characteristics contributed by the slime producing *Streptococcus lactis* and/or *Streptococcus cremoris* are overcome. The result is a uniformly smooth, velvety, non-slimy product.

The mixed culture contains the traditional milk fermenting, non-slime lactic acid producing bacteria. Non-slime producing *Streptococcus lactis, Streptococcus cremoris, Streptococcus thermophilus, Lactobacillus bulgaricus, Lactobacillus acidophilus, Lactobacillus lactis,* including particularly NRRL-B-5628 or mixtures thereof can be used with flavor (diacetyl) producing bacteria such as *Streptococcus lactis* subspecies *diacetylactis* and *Leuconostoc cremoris*. Many other species of non-slime, *Streptococcus* and *Lactobacillus* commonly used in milk fermentations to generate lactic acid can be used.

In order to avoid the problem of sliminess or ropiness and to produce the thick body, it is necessary to include the milk fermenting, non-slime, lactic acid producing bacteria in a volume ratio of between about 1:9 and 4:1 bacterial cells per part by volume of the slime producing *Streptococcus lactis, Streptococcus cremoris* or mixtures thereof. The cells to be mixed are generally at the same concentration level per unit volume. Within this range, variations in product body can occur depending upon the specific strain of slime producing *Streptococcus lactis* and/or *Streptococcus cremoris* selected.

The slime producing bacteria for the cultures can be grown in milk or other suitable media to a level of at least about $10^8$ cells per milliliter of growth medium. They can be used directly or they can be concentrated above the level of growth by various conventional means such as by centrifugation or ultrafiltration by dialysis of the growth medium to a higher cell count level, particularly above about $10^{10}$ cells per milliliter up to about $10^{12}$ cells per milliliter as is known to those skilled in the art. Cell counts are based upon the number of chains or colony forming units (CFU).

The slime producing cultures and the non-slime producing cultures can be added to milk as individual single strain preparations (concentrated or non-concentrated) or the slime producing cultures (concentrated or non-concentrated) can be mixed with non-slime producing cultures (concentrated or non-concentrated and then added directly to milk.

Also, milk can be inoculated with a single or mixed strain slime producing culture (concentrated or non-concentrated) and milk can be separately inoculated with single or mixed strain non-slime producing culture (concentrated or non-concentrated). Both inoculated milks are fermented at 10—32°C and then the resultant ropy body buttermilk can be blended with the resultant normal body buttermilk to produce a non-ropy, non-slimy, naturally stabilized, thick bodied buttermilk.

When concentrates of slime producing and non-slime producing cultures are prepared and stored for any length of time prior to preparation of the fermented milk product, freezing stabilizing agents can be added for freezing or the concentrate can be lyophilized in a manner conventionally known to the prior art. U.S. Pat. No. 3,420,742 illustrates a preferred method for the preparation of the bacterial concentrates which are frozen for storage with a freezing stabilizing agent such as glycerol or the like. The bacterial concentrate can be prepared from culture grown in a medium inoculated with a certain ratio of slime producing to non-slime producing *Streptococcus lactis* strains, *Streptococcus cremoris* strains or mixtures thereof or the individual slime producing and non-slime producing strains can be prepared separately and then blended together in the desired ratio of slime producing *Streptococcus cremoris* and/or *Streptococcus lactis* to non-slime, lactic acid producing bacteria along with *Leuconostoc cremoris* and *Streptococcus lactis* subspecies *diacetylactis* flavor producing bacteria prior to freezing. Many different freezing stabilizing agents which maintain viability of the bacteria upon storage are known to those skilled in the art.

Inoculated milk is fermented with the mixed culture at temperatures between about 10 to 32°C, preferably 24°C. The fermentation is generally conducted for between about 12 to 18 hours. The milk usually contains less than nine percent (9%) milk solids; however, between 8 and 14 percent solids can be present.

The resulting thick bodies, fermented milk products can be marketed with the bacteria in a viable form in a cooled product to restrict continuing fermentation. Alternatively, the product can be marketed with the

**0 111 020**

bacteria killed such as by pasteurization, after the fermentation. Such products are more stable to storage at ambient room temperatures of 15 to 21°C. They can be mixed with fruits or other flavorings.

Specific description

The following examples demonstrate the preparation of the fermented milk products of the present invention utilizing the mixed cultures of a lactic acid producing bacterium and *Streptococcus cremoris* NRRL-B-12,361, B-12,362 and B-12,363. Examples 1—4 illustrate the growth of the bacteria, the preparation of the bacterial culture mixtures and the preparation of the fermented milk products using the bacterial cultures.

Example 1

A growth medium comparable to that described in U.S. Reissue Patent Nos. 28,276 and 28,488 was prepared, heat-treated and cooled to 24°C. The medium was inoculated at the rate of 0.89 volume percent with a 10 to 12 hour milk culture inoculum consisting of 40 volume percent of NRRL-B-12,361 and 60 volume percent of *Streptococcus lactis* and/or *Streptococcus cremoris* non-slime producing mixed strains. No attempt was made to determine the exact composition of the mixed non-slime producing culture since it made no difference.

The inoculated medium was held at 24°C with constant neutralization at pH 5.8 until carbohydrate was depleted. The bacteria were removed from the spent medium by centrifugation to about $50 \times 10^9$ cfu per ml and were blended with 10 weight percent of a concentrate of *Leuconostoc cremoris* containing about $1 \times 10^9$ cfu per ml. Ten weight percent of sterile glycerol was added and the resultant thoroughly mixed concentrate was packaged in appropriate containers and was quick-frozen and stored at −34°C.

After storage, the concentrated culture was removed from freezer and placed into 32°C water bath to thaw. Skim milk containing 9% solids-not-fat was heat treated at 180°F for 30 minutes and cooled to 24°C. The milk was inoculated at rate of 0.567 ml of the thawed concentrated culture per 3785 ml milk. Control milk was inoculated with a commercial concentrate of non-slime producing strains of *Streptococcus lactis* and/or *Streptococcus cremoris* at same rate.

The inoculated milk was incubated at 24°C for 16 hours, chilled to 10°C, thoroughly mixed to break curd and evaluated organoleptically. The control buttermilk inoculated with non-slime producing strains of *Streptococcus lactis* and/or *Streptococcus cremoris* had thin body characteristic of buttermilk made with unfortified, non-stabilized skim milk. The test buttermilk inoculated with mixture of slime and non-slime producing strains of *Streptococcus lactis* and/or *Streptococcus cremoris* had a thick silky smooth "velvet" texture which was not ropy or slimy. The body was comparable in mouth feel (but not in viscosity by Zahn cup measurement per Example 4) to buttermilk made with skim milk fortified with 1% solids-not-fat and inoculated with usual, non-slime producing strains.

Example 2
Buttermilk made with various ratios of slime producing NRRL-B-12,361 to non-slime producing *Streptococcus lactis* and/or *Streptococcus cremoris*

Skim milk (containing 9% solids-not-fat by test) was heat-treated at 180°F for 30 minutes and cooled to 24°C. Buttermilk was made by inoculating the milk with various mixtures of slime producing *Streptococcus cremoris* NRRL-B-12,361 and non-slime producing *Streptococcus lactis* and/or *Streptococcus cremoris* strains which contained about $1 \times 10^9$ cfu per ml at rate of 1 ml of overnight culture (sterile 11% NFDM incubated at 24°C for 16 hours) per 100 ml of milk.

The inoculated milk was incubated 16 hours at 24°C, chilled to 10°C, thoroughly mixed to break curd and evaluated organoleptically. The results are shown in Table I.

4

TABLE I

| Slime producing S. cremoris NRRL-B-12,361 | Non-slime producing mixed S. lactis and/or S. cremoris strains | Texture of buttermilk |
|---|---|---|
| 90% (volume) | 10% (volume) | Ropy, "snotty" defect |
| 80% | 20% | Ropy, "snotty" defect |
| 75% | 25% | Too viscous |
| 50% | 50% | Thick, not viscous, not ropy, not slimy |
| 40% | 60% | Thick, not viscous, not ropy, not slimy |
| 30% | 70% | Not as thick as above, but thicker than control |
| 20% | 80% | Comparable to above |
| 0 | 100% | Thin body characteristic of unfortified, non-stabilized buttermilk. |

The results in Table I show that an inoculum consisting of anything more than about 80% by volume of slime producing *Streptococcus cremoris* NRRL-B-12,361 results in a product which is characterized by the prior art as being "snotty" or ropy. An inoculum containing less than 40% by volume of NRRL-B-12,361 resulted in a fermented product which was slightly thicker than regular buttermilk in texture. Thus the thick velvety, non-slimy texture was obtained only in a narrow ratio range of NRRL-B-12,361 to non-slime forming *Streptococcus cremoris* and/or *Streptococcus lactis* which will vary depending upon specific slime producing strains used as can be seen from Example 3.

Example 3
Buttermilk made with various ratios of slime producing *Streptococcus cremoris* NRRL-B-12,362 to non-slime producing *Streptococcus lactis* and/or *Streptococcus cremoris*
Buttermilk was made as in Example 2 above and results are shown in Table II.

TABLE II

| Slime producing S. cremoris NRRL-B-12,362 | Non-slime producing mixed S. lactis and or S. cremoris | Texture of buttermilk |
|---|---|---|
| 45% (volume) | 55% (volume) | Ropy, "snotty" defect |
| 33.3% | 66.6% | Too viscous, not ropy |
| 20% | 80% | Thick, not viscous, not ropy, not slimy |
| 0% | 100% | Thin body characteristic of unfortified, non-stabilized buttermilk |

The results in Table II show that an inoculum consisting of anything more than about 45% by volume of slime producing *Streptococcus cremoris* NRRL-B-12,362 results in a product which is characterized by the prior art as being "snotty" or ropy.

Example 4
Buttermilk was made from unfortified skim milk treated as in Example 2. The skim milk was inoculated with different ratios of slime producing *Streptococcus cremoris* strains to non-slime producing mixed *Streptococcus lactis* and *Streptococcus cremoris* strains. (Inoculum consisted of 16 hours at 24°C milk cultures at rate of 1 ml per 100 ml of milk.) Inoculated skim was incubated for 16 hours at 24°C and viscosity of resultant buttermilk was determined with Zahn Viscosimeter cups No.—002 and —004 (CSC Scientific

5

Company Chicago, Illinois 60623, CSC No. 027134). Viscosity is expressed as mPas. After viscosity determination, buttermilk was chilled to 10°C and evaluated organoleptically. The results are shown in Table III.

TABLE III

| Slime producing culture number | Inoculum volume percent ratio | | mPas at 25°C | Organoleptic evaluation of buttermilk texture |
|---|---|---|---|---|
| | Slime producer | Non-slime producer | | |
| NRRL-B-12,361 | 100 | 0 | 725 | Ropy, too mucoid |
| B-12,361 | 75 | 25 | 600 | Ropy, too mucoid |
| B-12,361 | 50 | 50 | 445 | Thick, not ropy |
| B-12,361 | 25 | 75 | 285 | Thinner than above |
| B-12,361 | 0 | 100 | 50 | Thin body characteristic of unfortified, non-stabilized buttermilk |
| NRRL-B-12,362 | 100 | 0 | 800 | Ropy, too mucoid |
| B-12,362 | 75 | 25 | 650 | Ropy, too mucoid |
| B-12,362 | 50 | 50 | 500 | Thick, slightly ropy?? |
| B-12,362 | 25 | 75 | 425 | Thick, not ropy |
| B-12,362 | 0 | 100 | 50 | Thin body characteristic of unfortified, non-stabilized buttermilk |
| NRRL-B-12,363 | 100 | 0 | 300 | Ropy, mucoid |
| B-12,363 | 75 | 25 | 225 | Thick, not ropy |
| B-12,363 | 50 | 50 | 60 | Thinner than above |
| B-12,363 | 25 | 75 | 50 | Thin body... |
| B-12,363 | 0 | 100 | 50 | Thin body... |

The fermented milk products preferably have a Zahn cup viscosity between about 60 and 500 mPas, however, mouth feel is the preferred method of determining the desirable thick texture of the products of the present invention.

Unexpectedly the buttermilk of the present invention have the same mouth feel when made from skim milk as buttermilk made from 1 to 2 percent by weight cream added to milk and fermented with conventional cultures. The present invention also allows the elimination of a portion of the conventionally added milk solids in sour cream.

Lactobacillus lactis NRRL-B-5628 is available to anyone who requests it by number from the United States Department of Agriculture, Northern Regional Research Center, 1815 North University Street, Peoria, Illinois 61604, U.S.A.

**Claims**

1. A thick bodied liquid, fermented milk product which comprises: milk with a pH between about 4.2 and 4.7 which has been fermented with a mixed culture containing a milk fermenting, non-slime, lactic acid producing bacteria and slime producing Streptococcus lactis, Streptococcus cremoris or mixtures thereof having the thickening and stabilizing characteristics of Streptococcus cremoris NRRL-B-12,361, 12,362 or 12,363 to produce the thick bodied milk product without need for added milk solids and without resulting in a slimy or ropy product, wherein the product is stable to separation of whey from curd upon storage at refrigeration temperatures without added stabilizing agents, said slime producing Streptococcus lactis or Streptococcus cremoris alone further being capable of producing a Zahn cup viscosity of about 300 mPas or above when incubated in milk for 16 hours at 24°C.

2. The product of Claim 1 wherein the mixed culture in addition contains *Leuconostoc cremoris, Streptococcus lactis* subspecies *diacetylactis* or mixtures thereof to impart a diacetyl flavor to the product and the product is a thick bodied buttermilk or sour cream.

3. The product of Claim 1 which has been fermented at between about 10°C to 32°C.

4. The product of Claim 1 which the slime producing *Streptococcus cremoris* has essentially the milk fermentation characteristics of NRRL-B-12361.

5. The product of Claim 1 wherein the slime producing *Streptococcus cremoris* is NRRL-B-12,361.

6. The product of Claim 1 wherein the slime producing *Streptococcus cremoris* is NRRL-B-12,362.

7. The product of Claim 1 wherein the slime producing *Streptococcus cremoris* is NRRL-B-12,363.

8. The product of Claim 1 wherein the fermentation has been completed in 12 to 18 hours at 24°C.

9. The product of Claim 1 which is mixed with additional flavoring.

10. The product of Claim 9 wherein the flavoring is a fruit flavor.

11. The product of Claim 1 wherein the bacteria after the fermentation are viable in the product cooled so as to retard continuing fermentation.

12. The product of Claim 1 wherein the bacteria are rendered non-viable after the fermentation.

13. The product of Claim 1 wherein the non-slime, lactic acid producing bacteria are non-slime producing strains of *Streptococcus lactis, Streptococcus cremoris, Streptococcus thermophilus, Lactobacillus bulgaricus, Lactobacillus acidophilus Lactobacillus lactis* including *Lactobacillus lactis* NRRL-B-5628 or mixtures thereof.

14. The method of producing a thick bodied liquid fermented milk product which comprises:

(a) providing in milk a mixed culture containing milk fermenting, non-slime, lactic acid producing bacteria which reduce the pH of the milk and a slime producing Streptococcus lactis, Streptococcus cremoris or mixtures thereof having the thickening and stabilizing characteristics of Streptococcus cremoris NRRL-B-12,361, 12,362, or 12,363, said slime producing Streptococcus lactis or Streptococcus cremoris alone further being capable or producing a Zahn cup viscosity of about 300 mPas or above when incubated in milk for 16 hours at 24°C; and

(b) fermenting the milk with the culture to produce the thick bodied milk product without need for addition of non-fat milk solids and without resulting in a slimy or ropy product, wherein the product is stable to separation of whey from curd upon storage at refrigeration temperatures without added stabilizing agents.

**Patentansprüche**

1. Ein dickflüssiges, fermentiertes Milchprodukt, das enthält: Milch mit einem pH-Wert zwischen etwa 4,2 und 4,7, die mit einer gemischten Kultur fermentiert wurde, wobei die Kultur Milch fermentierende, schleimlose, Milchsäure produzierende Bakterien sowie einen Schleim produzierenden Streptococcus lactis, Streptococcus cremoris oder eine Mischung aus diesen enthält, wobei die genannten Streptococcen die Verdickungs- und Stabilisierungscharakteristika von Streptococcus cremoris NRRL-B-12 361, 12 362 oder 12 363 haben, um die dickflüssige Milch herzustellen, ohne die Notwendigkeit, feste Milchbestandteile zuzugeben und ohne im Ergebnis ein schleimiges, fadenziehendes Produkt zu erhalten, wobei das Produkt nach Lagerung bei Kühlschranktemperatur ohne Zugabe von stabilisierenden Mitteln stabil gegen die Abtrennung der Molke von der geronnenen Milch ist und der genannte, Schleim produzierende Streptococcus lactis oder Streptococcus cremoris alleine weiterhin fähig ist, eine "Zahn-cup"-Viscosität von etwa 300 mPas oder mehr herzustellen, wenn er in der Milch 16 Stunden bei 24°C inkubiert wird.

2. Ein Produkt nach Anspruch 1, wobei die Mischkultur zusätzlich Leuconostoc cremoris, Streptococcus lactis subspecies diacetylactis oder Mischungen aus diesen enthält, um dem Produkt ein Diacetylaroma zu verleihen und daß das Produkt eine dickflüssige Buttermilch oder Sauercreme ist.

3. Produkt nach Anspruch 1, wobei zwischen etwa 10 bis 32°C fermentiert wurde.

4. Produkt nach Anspruch 1, wobei das Schleim produzierende Bakterium der Art Streptococcus cremoris im wesentlichen die Milchfermentierungseigenschaften von NRRL-B-12361 aufweist.

5. Produkt nach Anspruch 1, wobei das Schleim produzierende Bakterium der Art Streptococcus cremoris der Stamm NRRL-B-12 361 ist.

6. Produkt nach Anspruch 1, wobei das Schleim produzierende Bakterium der Art Streptococcus cremoris der Stamm NRRL-B-12 362 ist.

7. Produkt nach Anspruch 1, wobei das Schleim produzierende Bakterium der Art Streptococcus cremoris der Stamm NRRL-B-12 363 ist.

8. Produkt nach Anspruch 1, wobei die Fermentierung vollständig in 12 bis 18 Stunden bei 24°C durchgeführt wird.

9. Produkt nach Anspruch 1, wobei das Produkt mit zusätzlichen Aromastoffen vermischt wird.

10. Produkt nach Anspruch 9, wobei der Aromastoff ein Fruchtaroma ist.

11. Produkt nach Anspruch 1, wobei die Bakterien nach dem Fermentieren in dem gekühlten Produkt lebensfähig sind, so daß die Fermentierung verlangsamt fortgesetzt wird.

**0 111 020**

12. Produkt nach Anspruch 1, wobei die Bakterien nach dem Fermentieren in einem nicht mehr lebensfähigen Zustand gebracht werden.

13. Produkt nach Anspruch 1, wobei die schleimlosen, Milchsäure produzierenden Bakterien Stämme von Streptococcus lactis, Streptococcus cremoris, Streptococcus thermophilus, Lactobacillus bulgaricus, Lactobacillus acidophilus, Lactobacillus lactis, einschließlich Lactobacillus lactis NRRL-B-5628 oder Mischungen aus diesen sind, die keinen Schleim produzieren.

14. Verfahren zum Herstellen eines dickflüssigen, fermentierten Milchprodukts, das enthält:

a) Zurverfügungstellen einer Mischkultur in Milch, wobei die Mischkultur Milch fermentierende, schleimlose, Milchsäure produzierende Bakterien enthält, die den pH-Wert der Milch erniedrigen sowie einen Schleim bildenden Streptococcus lactis, Streptococcus cremoris oder Mischungen aus diesen, die die Verdickungs- und Stabilisierungscharakteristika von Streptococcus cremoris NRRL-B-12 361, 12 362 oder 12 363 haben und der Schleim produzierende Streptococcus lactis oder Streptococcus cremoris alleine weiterhin fähig ist, eine "Zahn-cup"-Viscosität von etwa 300 mPas oder mehr herzustellen, wenn er in Milch 16 Stunden bei 24°C fermentiert wird; und

b) Fermentieren der Milch mit der Kultur, um ein dickflüssiges Milchprodukt herzustellen ohne die Notwendigkeit der Zugabe von festen Magermilchbestandteilen und ohne im Ergebnis ein schleimiges oder fadenziehendes Produkt zu erhalten, wobei das Produkt nach Lagerung bei Kühlschranktemperaturen ohne Zugabe von stabilisierenden Mitteln stabil gegen die Abtrennung der Molke von der geronnenen Milch ist.

**Revendications**

1. Produit laitier fermenté liquide épais comprenant: du lait avec un pH compris entre environ 4,2 et 4,7 ayant été fermenté par une culture mixte contenant une bactérie produisant de l'acide lactique, ne donnant pas de caractère visqueux et fermentant le lait, et un Streptococcus lactis, un Streptococcus cremoris ou leurs mélanges donnant un caractère visqueux ayant les caractéristiques d'épaississant et de stabilisant du Streptococcus cremoris NRRL-B-12361, 12362 ou 12 363 pour produire le produit laitier épais sans qu'il soit nécessaire d'ajouter des solides du lait et sans que cela conduise à un produit visqueux ou filant, dans lequel le produit est stable à la séparation du petit lait et du caillé lors d'un stockage aux températures de réfrigération sans adjonction d'agents stabilisants, ce Streptococcus lactis ou ce Streptococcus cremoris donnant un caractère visqueux, suffisant à lui seul à produire une viscosité à la coupe Zahn d'environ 300 mPas ou plus lorsqu'on le fait incuber dans du lait pendant 16 heures à 24°C.

2. Produit selon la revendication 1, dans lequel la culture mixte contient en outre un leuconostoc cremoris, un Streptococcus lactis de la sous-espèce diacetylactis ou leurs mélanges pour conférer au produit un parfum diacétylique et le produit est un babeurre épais ou une crème acide épaisse.

3. Produit selon la revendication 1, qui a été fermenté entre environ 10°C et 32°C.

4. Produit selon la revendication 1, dans lequel le Streptococcus cremoris donnant un caractère visqueux présente essentiellement les caractéristiques de fermentation du lait du NRRL-B-12361.

5. Produit selon la revendication 1, dans lequel le Streptococcus cremoris donnant le caractère visqueux est le NRRL-B-12361.

6. Produit selon la revendication 1, dans lequel le Streptococcus cremoris donnant le caractère visqueux est le NRRL-B-12362.

7. Produit selon la revendication 1, dans lequel le Streptococcus cremoris donnant le caractère visqueux est le NRRL-B-12363.

8. Produit selon la revendication 1, dans lequel la fermentation a été effectuée en 12 à 18 heures à 24°C.

9. Produit selon la revendication 1, qui est mélangé à un parfum supplémentaire.

10. Produit selon la revendication 9, dans lequel le parfum est un parfum de fruit.

11. Produit selon la revendication 1, dans lequel les bactéries après fermentation sont viables dans le produit refroidi de façon à retarder la fermentation en cours.

12. Produit selon la revendication 1, dans lequel les bactéries sont rendues non viables arpès la fermentation.

13. Produit selon la revendication 1, dans lequel les bactéries produisant de l'acide lactique et ne donnant pas de caractère visqueux sont des souches ne donnant pas de caractère visqueux du Streptococcus lactis, du Streptococcus cremoris, du Streptococcus thermophilus, du lactobacillus bulgaricus, du lactobacillus acidophilus, du lactobacillus lactis y compris le lactobacillus lactis NRRL-B-5628 ou leurs mélanges.

14. Procédé de production d'un produit laitier fermenté liquide épais consistant à:

(a) ajouter à du lait une culture mixte contenant des bactéries produisant de l'acide lactique, ne donnant pas de caractère visqueux, et fermentant le lait, qui réduisent le pH du lait, et un Streptococcus lactis, un Streptococcus cremoris ou leurs mélanges donnant un caractère visqueux ayant les caractéristiques d'épaississant et de stabilisant du Streptococcus cremoris NRRL-B-12361, 12362 ou 12363, ce Streptococcus lactis ou ce Streptococcus cremoris donnant un caractère visqueux, étant capable à lui seul de produire une viscosité à la coupe Zahn d'environ 300 mPas ou plus lorsqu'on le fait incuber dans le lait pendant 16 heures à 24°C; et

(b) faire fermenter le lait avec la culture pour produire le produit laitier épais sans qu'il soit nécessaire

8

d'ajouter des solides du lait non gras et sans que cela ne conduise à un produit visqueux ou filant, dans lequel le produit est stable à la séparation du petit lait et du caillé lors d'un stockage aux températures de réfrigération sans addition d'agents stabilisants.